# EUROPÄISCHE PATENTSCHRIFT

(11) **EP 0 842 360 B1**
(45) Veröffentlichungstag und Bekanntmachung des Hinweises auf die Patenterteilung: **27.12.2000**
(21) Anmeldenummer: 96927682.3
(22) Anmeldetag: 05.08.1996
(51) Int. Cl.: F03D 11/00, F03D 1/06

(54) **ENTEISEN EINES ROTORBLATTES EINER WINDKRAFTANLAGE**
DEICING A ROTOR BLADE OF A WIND DRIVEN POWER STATION
DEGIVRAGE D'UNE PALE DE ROTOR D'UNE INSTALLATION EOLIENNE

(30) Priorität: 05.08.1995 DE 19528862
(43) Veröffentlichungstag der Anmeldung: 20.05.1998
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: EP9603448
(87) Internationale Veröffentlichungsnummer: WO9706367

(56) Entgegenhaltungen:
- EP-A- 0 475 658
- WO-A-91/04646
- DE-C- 842 330
- US-A- 4 741 499
- US-A- 4 786 233

## Beschreibung

Die Erfindung bezieht sich auf ein Verfahren zum Enteisen eines Rotorblattes einer Windenergieanlage, das miteinander kommunizierende Hohlräume aufweist. Die Erfindung bezieht sich auch auf ein zur Durchführung des Verfahrens vorteilhaft geeignetes Rotorblatt.

Aus DE-PS-842 330 ist ein Windkraftwerk mit Rotorblättern bekannt, die gegen Eisbildung an den Rotorblattspitzen geschützt werden sollen. Hierzu weist das Rotorblatt im Bereich der Vorderkante innenseitig Hohlräume auf, die parallel zur Rotorblattlängsachse über Durchbrechungen der Versteifungselemente strömungstechnisch miteinander verbunden sind. Erwärmte Luft gelangt ausgehend von der Rotorblattnabe somit in etwa parallel zur Rotorblattlängsachse über die Strömungskanäle in den Bereich der Rotorblattspitze und wird dann über steuerbare Ausläße nach draußen abgegeben. Die erwärmte Luft wird somit aus dem Zentralbereich der Windkraftanlage radial in den Endbereich einer Rotorblattspitze geführt und unter Abgabe der Wärmeenergie des Wärmeträgermediums wird die Blattvorderkante erwärmt, wodurch die Eisbildung zu verhindern versucht wird.

Der Eisansatz an den Oberflächen von Rotorblättern einer Windenergieanlage kann zu unerwünschten Unwuchten mit den sich daraus ergebenden mechanischen Belastungen der Anlage, aber auch zu aerodynamischen Störungen führen, die sich nachteilig auf die Leistung der Anlage auswirken können. Darüber hinaus stellt eine bei laufender Anlage sich bildende Vereisung eine Unfallgefahr dar, weil das Eis abplatzen kann und dann Eisbrocken unter Umständen weit in die Umgebung der Anlage geworfen werden.

Windenergieanlagen sollen mit möglichst geringen Kosten erstellt und mit hohem Nutzen betrieben werden. Zusätzliche Maßnahmen zur Verhinderung einer Vereisung sollen sich zwar möglichst nicht, weder auf die Erstellungskosten noch auf den Nutzen, nachteilig auswirken, jedoch laßt sich aufgrund eines dafür notwendigen Konstruktions- und Bauaufwandes eine Auswirkung auf die Erstellungskosten kaum vermeiden. Besondere Probleme konstruktiver Art bereiten diesbezüglich die zu Eisansatz neigenden Rotorblätter, da sie sich gegenüber feststehenden Bauteilen der Anlage bewegen und deshalb Übergänge zwischen stillstehenden und beweglichen Teilen der Windenergieanlage konstruktiv berücksichtigt und sicher beherrscht werden müssen.

Der Erfindung liegt die Aufgabe zugrunde, ein in konstruktiver Hinsicht möglichst einfaches und damit kostengünstiges, dabei jedoch effektives Verfahren zur Vermeidung der sich aus Vereisungen der Rotorblätter ergebenden Nachteile zu finden, sowie ein entsprechendes, dafür geeignetes Rotorblatt zu schaffen.

Diese Aufgabe ist bei einem Rotorblatt der vorbezeichneten Gattung erfindungsgemäß dadurch gelöst, daß ein gegebenenfalls zuvor wenig, und zwar auf etwa + 1° C bis + 5° C erwärmtes Wärmeträgermedium durch die Hohlräume geleitet wird.

Bei Außentemperaturen um den Gefrierpunkt, zum Beispiel von +2° bis -5° C und auch nur dann wenn der Luftfeuchtegehalt der Luft entsprechend hoch ist, können sich Vereisungen bilden. Das erfindungsgemäße Verfahren nutzt mit Vorteil aus, daß am Rotorblatt angesetztes Eis eine Isolationsschicht zwischen der Blattoberfläche und der Umgebungsluft bildet. Dadurch ist es mit relativ wenig Wärmeleistung möglich, die vereiste Oberfläche der jeweiligen Blattwand soweit anzuwärmen, daß das Eis antaut und selbsttätig vom Rotorblatt abfällt. Für die erfindungsgemäße Enteisung wird das Rotorblatt nicht beheizt, d. h. eine Vereisung wird nicht generell, wie in der oben erwähnten DE-PS-842 330, verhindert, sondern es wird bereits entstandenes Eis wieder entfernt.

Vereisungen eines Rotorblattes entstehen insbesondere an der der Laufrichtung zugekehrten Blattnasen-Kante sowie der äußeren Blattspitze. Erfindungsgemäß wird deshalb so vorgegangen, daß das erwärmte Wärmeträgermedium nach Durchströmen eines blattnasenseitigen Hohlraumes mit entsprechender Wärmeabgabe an Bereiche der Blattwand in einen dazu benachbarten blatthinterkantenseitigen Hohlraum, gelenkt und daraus abgeleitet wird.

Sind in den Rotorblättern parallel zur Blattlängsachse verlaufende Versteifungsschotten vorhanden, können diese besonders vorteilhaft genutzt werden, um Strömungswege für einzuleitendes Wärmeträgermedium auszubilden, das zunächst durch den blattnasenseitigen Hohlraum strömt und dort seine Wärme an die Blattwand, insbesondere die Blattnase abgibt, um daran angesetztes Eis anzutauen. Danach kann das Wärmeträgermedium auch noch weitere Hohlräume durchströmen, in die es nacheinander geleitet wird, bevor eine Ableitung erfolgt. Selbstverständlich können kommunizierende Hohlräume auch durch z.B. eingebettete oder eingebaute Rohre, Rohrstücke und dergleichen ausgebildet sein.

Mit besonderem Vorteil wird das Wärmeträgermedium in einem mit einer Rotornabe verbindbaren Fußbereich des Rotorblattes eingeleitet und im Bereich der Rotorblattspitze in den entsprechenden Hohlraum, nämlich eine blatthinterkantenseitige Kammer umgelenkt und wieder zum Fußbereich abgeleitet. Damit ist auf einfachste Weise eine Zirkulation des Wärmeträgermediums innerhalb des Rotorblattes gegeben. Dabei kann als Wärmeträgermedium die im Rotorblatt befindliche Luft verwendet werden. Denkbar ist es jedoch auch, Rotorblätter mit speziellen, zweckdienlicheren Eigenschaften als Luft aufweisenden Gasen oder Dämpfen zu füllen, die beispielsweise in Temperaturbereichen, in denen die Gefahr des Eisansatzes besteht, Kondensationswärme freisetzen können, um den Energieaufwand für eine gegebenenfalls notwendige Erwärmung des im Rotorblatt zirkulierenden Wärmeträgermediums zu verringern. Ein elektrisch nicht leitendes Wärmeträgermedium wie Luft ist darüber hinaus vorteilhaft hinsichtlich des Blitzschutzes für die Windenergieanlage, im Gegensatz zu elektrischer Beheizung über zum Beispiel Widerstandsdrähte.

Um das abgeleitete Wärmeträgermedium nach seinem Abströmen aus dem letzten Hohlraum, der blatthinterkantenseitigen Kammer, gegebenenfalls einer Aufwärmung zu unterwerfen und anschließend erneut in den ersten Hohlraum die blattnasenseitige Kammer einzuleiten, können zur Erzeugung und Aufrechterhaltung der Wärmeträgermedium-Zirkulation im Rotorblatt elektrische Gebläse sowie in der erzeugten Strömung des Wärmeträgermediums angeordnete Heizelemente verwendet werden.

Da die Gebläse sowie die gegebenenfalls in die Gebläse integrierten Heizelemente in den Fußbereich des Rotorblattes angeordnet sind, sitzen sie mit Vorteil in der Nähe der Rotationsachse und laufen demzufolge mit geringer Umfangsgeschwindigkeit um, so daß statische und dynamische Beeinträchtigungen durch den Einbau der Gebläse sowie der Heizelemente praktisch vernachlässigbar sind. Daraus ergibt sich insbesondere der Vorteil, daß bereits konstruierte und gefertigte Rotorblätter, die sich im Einsatz bewährt haben, in konstruktiver Hinsicht nicht wesentlich abgeändert werden müssen, um die erfindungsgemäße Enteisung nutzen zu können. Elektrische Gebläse sowie Heizelemente mit entsprechend geringer Leistung, die voll ausreichen, die Zirkulation der erwärmten Luft durch die Hohlräume bzw. Kammern im Rotorblatt aufrechtzuerhalten, weisen geringe Bauabmessungen auf und sind als industrielle Serienteile erhältlich.

Die elektrischen Zuleitungen zu den im Rotorblatt installierten elektrischen Gebläsen sowie den zugeordneten Heizelementen sind ebenfalls einfach ausführbar. Die benötigte elektrische Energie ist relativ gering.

Damit bei auftretender Eisbildung an Rotorblättern der Windenergieanlage die Enteisung selbsttätig ablaufen kann, ist nach einer Weiterbildung des erfindungsgemäßen Verfahrens vorgesehen, daß bei laufender Windenergieanlage Vibrationen aufgrund von Unwuchten, die durch Eisbildung an den Rotorblättern entstehen, meßtechnisch erfaßt und in ein Schaltsignal zur Stillegung des Rotors der Windenergieanlage sowie zur Inbetriebsetzung der Wärmeträgermedium-Zirkulation in den Rotorblättern und gegebenenfalls der zugeordneten Heizelemente umgesetzt werden, daß, nach einer vorbestimmten wirkzeit der Zirkulation und der Heizelemente, die Windenergieanlage wieder eingeschaltet wird und daß die Vorgänge gegebenenfalls so oft wiederholt werden, bis die Windenergieanlage aufgrund erfolgter Enteisung vibrationsfrei läuft.

Es können Maßnahmen getroffen werden, daß Außentemperatur, Temperatur des Wärmeträgermediums, Rotordrehzahl, Windgeschwindigkeit und Vibrationen mit entsprechenden Sensoren erfaßt und in einer programmgesteuerten Automatik zu entsprechenden, eine Enteisung einleitenden und steuernden Schaltsignalen verarbeitet werden.

Ein zur Durchführung des erfindungsgemäßen Verfahrens geeignetes Rotorblatt, für welches auch selbständiger Schutz beansprucht wird, das miteinander kommunizierende Hohlräume aufweist, zeichnet sich dadurch aus, daß im mit einer Rotornabe verbindbaren Fußbereich des Rotorblattes Mittel zur Einleitung eines Wärmeträgermediums in zumindest einen blattnasenseitigen Hohlraum vorgesehen sind, und daß sich im blattspitzenseitigen Endbereich der Kammern wärmeträgermediumleitende, zueinander benachbarte Hohlräume verbindende Strömungswege befinden.

Bei einem erfindungsgemäßen Rotorblatt können die Hohlräume dadurch gebildet sein, daß ein von einer äußeren Blattwand umschlossener Blatt-Innenraum durch wenigstens ein parallel zur Blattlängsachse verlaufendes Versteifungsschott in Kammern, zumindest eine blattnasenseitige Kammer und eine blatthinterkantenseite Kammer geteilt ist.

Die verbindenden Strömungswege können einfache Durchbrüche in den die Hohlräume bzw. Kammern abteilenden Versteifungsschotten sein. Wird in die blattnasenseitige Kammer im Fußbereich des Rotorblattes Wärmeträgermedium eingeleitet, strömt dieses in der blattnasenseitigen Kammer bis zu dessen blattspitzenseitigen Endbereich und tritt dort in die jeweils benachbarte Kammer, vorzugsweise die blatthinterkantenseitige Kammer über, in der es zum Beispiel zum Fußbereich des Rotorblattes zurückströmen kann.

Selbstverständlich ist es auch möglich, die Strömungswege im Rotorblatt im Bereich seiner Blattspitze so auszubilden, daß das Wärmeträgermedium den gesamten blattspitzenseitigen Endbereich des Innenraums des Rotorblattes umspült.

Die Mittel zur Einleitung eines Wärmeträgermediums umfassen wenigstens ein elektrisches Gebläse mit integrierten Heizelementen, wobei die Saugseite jedes Gebläses an einen zuletzt durchströmten Hohlraum, die blatthinterkantenseitige Kammer, und die Druckseite jedes Gebläses an den ersten Hohlraum, die blattennasenseitige Kammer angeschlossen sind.

Elektrische Gebläse mit integrierten Heizelementen können mit Vorteil so gering dimensioniert werden, daß sie problemlos, auch in Mehrfachanordnung, in einem Innenraum eines Rotorblattes, und zwar in dessen Fußbereich, eingebaut werden können. Die Leistung auch kleinster elektrischer Gebläse dürfte ausreichen, um eine Luftzirkulation durch die Hohlräume im Rotorblatt in Gang zu setzen und aufrechtzuerhalten. Als Heizelemente lassen sich einfache Widerstandsheizungen mit Heizwendeln oder dergleichen einsetzen, die in jedes Gebläse integriert werden. Falls sich herausstellt, daß die Leistung eines elektrischen Gebläses mit Heizelementen nicht ausreicht, können auch mehrere entsprechend gering dimensionierte Gebläse mit jeweils integrierten Heizelementen zu einem Einbausatz zusammengefaßt werden, so daß sich die Leistungen der Gebläse addieren.

Damit eine optimale Zirkulation im Innenraum eines Rotorblattes gewährleistet ist, ist die dem Fußbereich des Rotorblattes zugekehrte Endseite des blattnasenseitigen Hohlraumes mit einem Verschlußdeckel gegenüber dem zum blatthinterseitigen Hohlraum hin offenen Innenraum dichtsetzbar.

Der Verschlußdeckel kann mit besonderem Vorteil als Träger für die elektrischen Gebläse mit Heizelementen genutzt werden, indem er wenigstens einen Durchbruch aufweist, in den ein Schachtteil mit darin aufgenommenem Gebläse eingesetzt ist.

Dabei ist jedes Schachtteil so in einen Durchbruch des Verschlußdeckels gesetzt, daß es zur Blattnasenkante hin geneigt ist und in die blattnasenseitige Kammer vorsteht. Damit ist der bei Betrieb des Gebläses erzeugte Luftaustritt zur Blattnase gelenkt und befindet sich in vorteilhafter Entfernung vom Fußbereich des Rotorblattes, wodurch dessen unerwünschte Aufwärmung während der Enteisung vermieden wird. Als Schachtteile können zum Beispiel Schläuche verwendet werden.

Wärmeverluste lassen sich desweiteren noch dadurch reduzieren, daß im Übergangsbereich zwischen dem fußbereichsseitigen Ende des Rotorblattes und einem dem Anschluß an eine Rotornabe dienendem Blattadapter eine Innenraumauskleidung aus isolierenden Werkstoffen vorgesehen ist. Die Innenraumauskleidung kann zum Beispiel eine in das fußbereichsseitige Ende des Rotorblattes formschlüssig eingesetzte Schaumstoffplatte sein, die etwa parallel zum Verschlußdeckel steht.

Ist der Verschlußdeckel ebenfalls aus isolierendem Werkstoff gebildet, ist der Innenraum auf der Saugseite der Gebläse weitgehend isoliert.

Ein Ausführungsbeispiel der Erfindung, aus dem sich weitere erfinderische Merkmale ergeben, ist in der Zeichnung dargestellt. Es zeigen:
- Fig. 1: den Fußbereich eines Rotorblattes im Längsschnitt
- Fig. 2: eine Ansicht eines Rotorblattes im Schnitt entlang der Linie II-II in Fig. 1
- Fig. 3: eine Ansicht des Rotorblattes im Schnitt entlang der Linie III-III in Fig. 3 und
- Fig. 4: ein Schaltschema für eine automatische Steuerung der Enteisung.

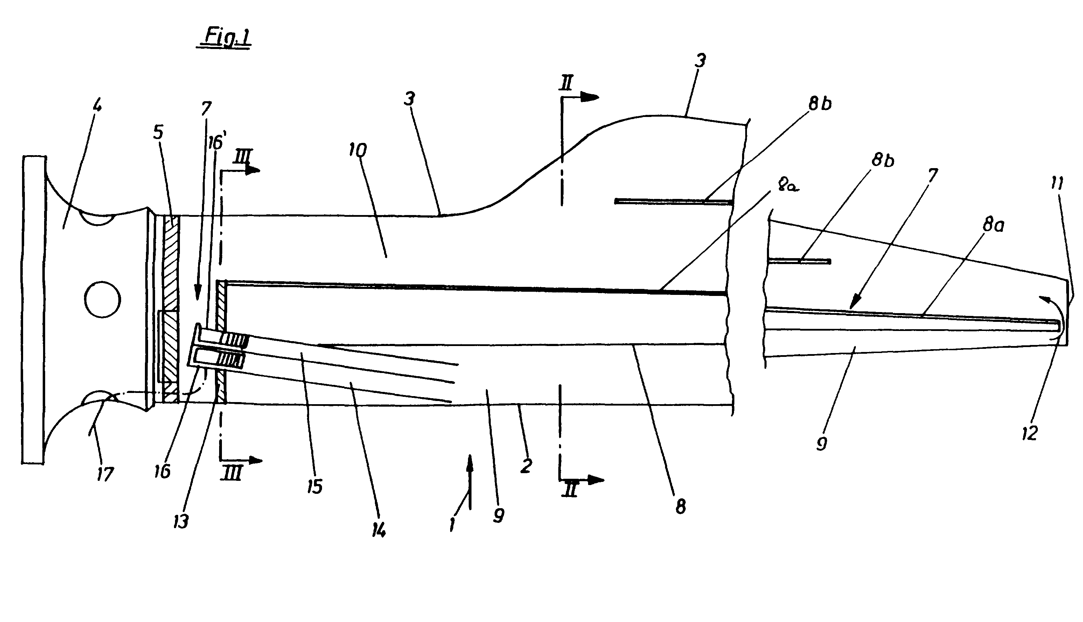

In Fig. 1 ist der untere Teil eines Rotorblattes, sein Fußbereich, in einem schematischen Längsschnitt dargestellt. Der Pfeil 1 gibt die Anströmungsrichtung an, wodurch die Blattnasen-Kante 2 des Rotorblattes verdeutlicht wird. Die Blatthinterkante ist mit 3 bezeichnet.

Dem Anschluß des Rotorblattes an eine nicht weiter dargestellte Rotornabe dient ein Blattadapter 4, an den wiederum das fußbereichsseitige Ende des Rotorblattes angesetzt ist. Im Übergangsbereich zwischen dem fußbereichsseitigen Ende und dem Blattadapter 4 ist eine Schaumstoffplatte 5 eingesetzt.

Das Rotorblatt ist hohl ausgebildet und der von der äußeren Blattwand 6 umschlossene Innenraum 7 ist durch wenigstens ein parallel zur Blattlängsachse verlaufendes Versteifungsschott 8 bzw. 8a, 8b in Kammern, zumindest eine blattnasenseitige Kammer 9 und eine blatthinterkantenseitige Kammer 10, geteilt. Das Versteifungsschott 8a endet kurz vor der Rotorblattspitze 11. Durch den Pfeil 12 ist hier verdeutlicht, daß eine Durchgangsverbindung von der blattnasenseitigen Kammer 9 zur blatthinterkantenseitigen Kammer 10 im Bereich der Blattspitze 11 im Rotorblatt gegeben ist.

Die dem Fußbereich des Rotorblattes zugekehrte Endseite der blattnasenseitigen Kammer 9 und bei diesem Ausführungsbeispiel auch der danebenliegenden, funktionslosen Kammer, die sich zwischen den Versteifungsschotten 8 und 8a befindet, ist mit einem Verschlußdeckel 13 gegenüber dem zur blatthinterkantenseitigen Kammer 10 hin offenen Innenraum 7 dichtgesetzt.

Der Verschlußdeckel dient als Träger für Schachtteile 14, 15, die zur Blattnasenkante 2 hin geneigt sind und in die blattnasenseitige Kammer 9 vorstehen.

In jedem Schachtteil ist ein Gebläse 16 bzw. 16' mit integriertem Heizelement angeordnet. Mit 17 ist eine hier lediglich angedeutete elektrische Zuleitung zur Versorgung der Gebläse und der Heizelemente bezeichnet.

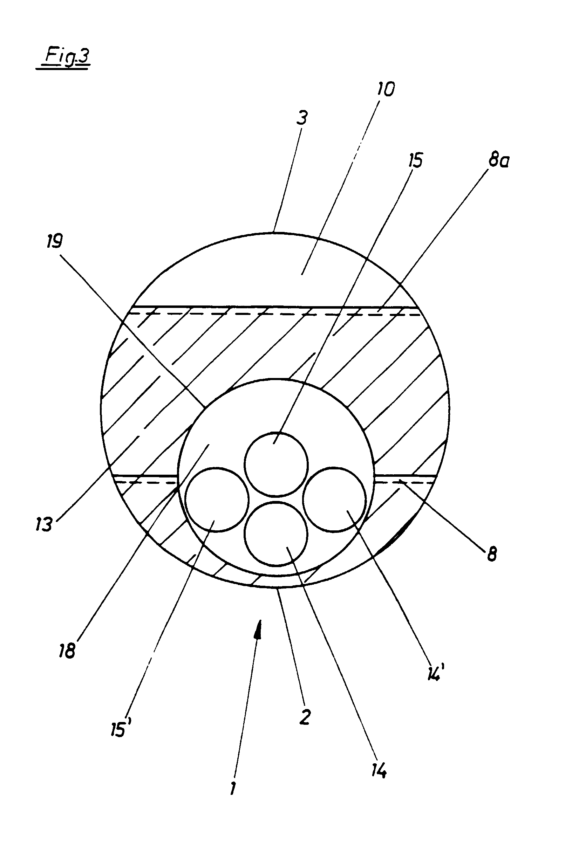

Fig. 3 zeigt eine Ansicht des Fußbereiches des Rotorblattes in einem Schnitt entlang der Linie III-III in Fig. 1. Gleiche Bauteile sind wieder mit gleichen Bezugszahlen bezeichnet.

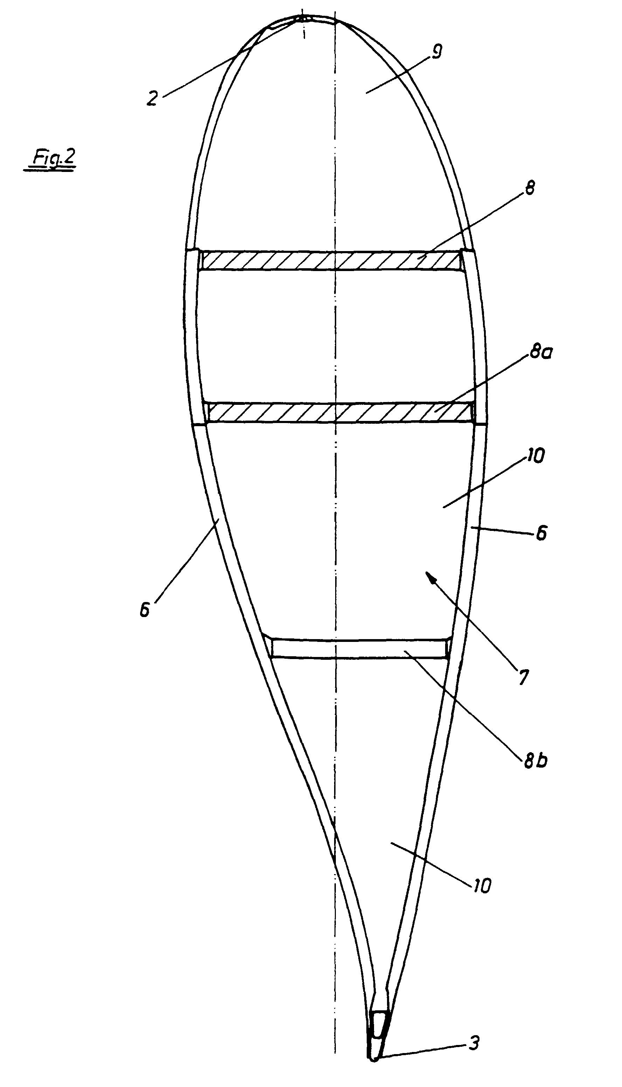

Fig. 2 zeigt eine Ansicht des Rotorblattes im Schnitt entlang der Linie II-II in Fig. 1. Gleiche Bauteile sind mit gleichen Bezugszahlen wie in Fig. 1 bezeichnet.

Fig. 3 verdeutlicht, daß der Verschlußdeckel 13 als Träger für insgesamt vier Schachtteile 14, 15, bzw. 14', 15' dient. Die Schachtteile 14, 15 bzw. 14', 15' mit den Gebläsen sind in einem Montageeinsatz 18 befestigt, der wiederum als Einheit in einen entsprechenden Durchbruch 19 im als Träger für den Montageeinsatz 18 dienenden Verschlußdeckel 13 formschlüssig einpassbar ist .

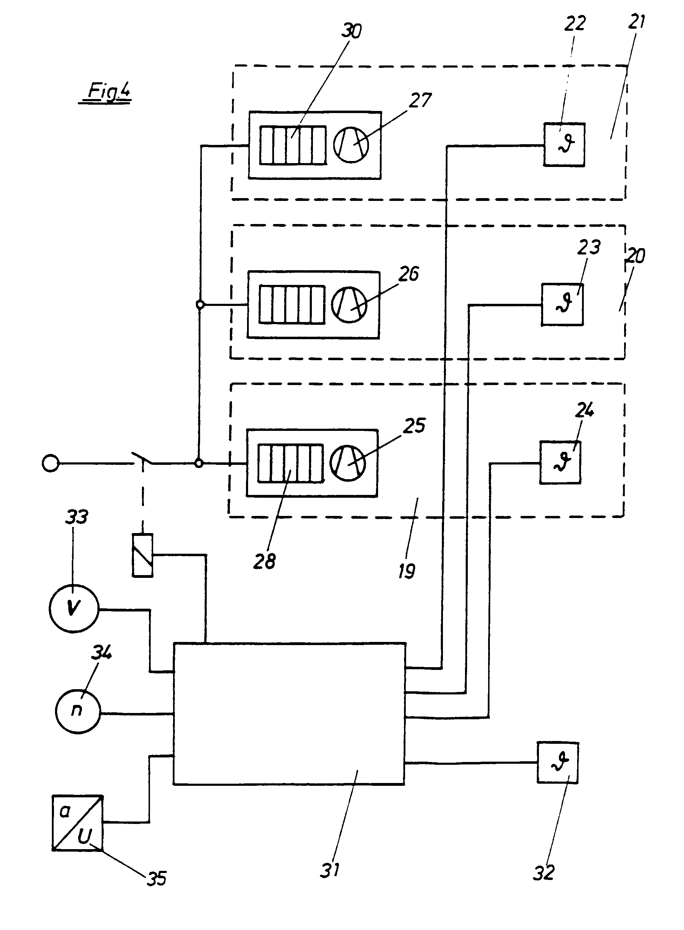

Fig. 4 zeigt ein schematisches Schaltdiagramm für eine Ausführungsmöglichkeit einer Steuerung der Enteisung von drei Rotorblättern eines Rotors einer Windenergieanlage. Jedes Rotorblatt 19, 20 und 21 ist durch ein durch gestrichelte Linien gezeichnetes rechteckiges Feld versinnbildlicht und entspricht in seiner Ausbildung einem Rotorblatt gemäß den Fig. 1 bis 3. In jedes Rotorblatt sind Sensoren 22, 23 bzw. 24 zur Erfassung der Temperatur eines Wärmeträgermediums eingebaut. In jedes Rotorblatt 19, 20 bzw. 21 sind ebenfalls elektrische Gebläse 25, 26 bzw. 27 eingesetzt (entsprechend Gebläse 16 und 16' in Fig. 1), die jeweils mit zugeordneten Heizelementen 28, 29 bzw. 30 in einer Baueinheit zusammengefaßt sind, wobei die Baueinheiten Mittel zur Einleitung eines Wärmeträgermediums in jeweils die blattnasenseitige Kammer des Innenraums jedes Rotorblattes bilden, dessen Temperaturen jeweils von den Sensoren 22, 23 bzw. 24 erfaßt werden. Die Messung der Temperatur des Wärmeträgermediums im Rotorblatt mit den Sensoren 22, 23 bzw. 24 dient der Funktionsüberwachung der Gebläse 25, 26, 27 sowie der Heizelemente 28, 29 und 30 sowie dem Schutz der Rotorblätter gegen Überhitzung.

Die Temperaturen werden von einer programmgesteuerten Automatik 31 abgefragt. Die programmgesteuerte Automatik 31 erfaßt auch über einen Sensor 32 die Außentemperatur sowie mit Sensor 33 die Windgeschwindigkeit, mit Sensor 34 die Rotordrehzahl und mit Sensor 35 Vibrationen, zum Beispiel Turmschwingungen.

Sobald die Windgeschwindigkeit für den Betrieb der Anlage ausreicht und die Außentemperatur in einem Bereich liegt, in dem Eisbildung an den Rotorblättern möglich ist, werden die Heizelemente und Gebläse umfassenden Einheiten in jedem Rotorblatt durch die Automatik eingeschaltet. Nach einer bestimmten Zeit wird die Windenergieanlage dann gestartet. Sollte durch ungleichmäßige Enteisung der Rotorblätter eine Unwucht im Rotor gegeben sein, so wird die daraus resultierende Vibration bei drehendem Rotor durch Messung der Turmschwingungen erkannt, die Anlage abgeschaltet und die Enteisung der Blätter bei stehendem Rotor wiederholt.
¹ Translator's Note: There appears to be an omission here in the German text.

## Patentansprüche

1. Verfahren zum Enteisen eines Rotorblattes einer Windenergieanlage, das miteinander kommunizierende Hohlräume aufweist, durch die ein gegebenenfalls zuvor erwärmtes Wärmeträgermedium geleitet wird,
dadurch gekennzeichnet, daß das erwärmte Wärmeträgermedium nach Durchströmen eines blattnasenseitigen Hohlraumes (9) mit entsprechender Wärmeabgabe an Bereiche der Blattwand in einen blatthinterkantenseitigen Hohlraum (10), gelenkt und daraus abgeleitet wird.

2. Verfahren nach Anspruch 1,
dadurch gekennzeichnet, daßdas Wärmeträgermedium in einen mit einer Rotornabe verbindbaren Fußbereich des Rotorblattes in den blattnasenseitigen Hohlraum (9) eingeleitet und im Bereich der Rotorblattspitze (11) in den blatthinterkantenseitigen Hohlraum (10) umgelenkt und wieder zum Fußbereich abgeleitet wird.

3. Verfahren nach einem der Ansprüche 1 und 2,
dadurch gekennzeichnet, daß als Wärmeträgermedium die im Rotorblatt befindliche Luft verwendet wird.

4. Verfahren nach einem der Ansprüche 1 bis 3,
dadurch gekennzeichnet, daß das abgeleitete Wärmeträgermedium nach seinem Abströmen aus dem zuletzt durchströmten Hohlraum (10) gegebenenfalls einer Aufwärmung unterworfen und anschließend erneut in den blattnasenseitigen Hohlraum (9) eingeleitet wird.

5. Verfahren nach einem der vorhergehenden Ansprüche,
dadurch gekennzeichnet, daß zur Erzeugung der Wärmeträger-Zirkulation im Rotorblatt elektrische Gebläse (16, 16' bzw. 25, 26, 27) sowie in der erzeugten Luftströmung angeordnete Heizelemente (28, 29, 30) verwendet werden.

6. Verfahren nach einem der vorhergehenden Ansprüche,
dadurch gekennzeichnet, daß bei laufender Windenergieanlage Vibrationen aufgrund von Unwuchten, die durch Eisbildung an den Rotorblättern entstehen, meßtechnisch erfaßt und in ein Schaltsignal zur Stillegung des Rotos der Windenergieanlage sowie zur Inbetriebsetzung der Wärmeträgermedium-Zirkulation in den Rotorblättern und gegebenenfalls der zugeordneten Heizelemente (28, 29, 30) umgesetzt werden, daß, nach einer vorbestimmten Wirkzeit der Zirkulation und der Heizelemente (28, 29, 30), die Windenergieanlage wieder eingeschaltet wird und daß die Vorgänge gegebenenfalls so oft wiederholt werden, bis die Windenergieanlage aufgrund erfolgter Enteisung vibrationsfrei läuft.

7. Verfahren nach Anspruch 6,
dadurch gekennzeichnet, daß Außentemperatur, Temperatur des Wärmeträgermediums, Rotordrehzahl, Windgeschwindigkeit und Vibrationen mit entsprechenden Sensoren (32; 22; 23; 24; 34; 33; 35) erfaßt und in einer programmgesteuerten Automatik (31) zu entsprechenden, eine Enteisung einleitenden und steuernden Schaltsignalen verarbeitet werden.

8. Windenergieanlagen-Rotorblatt, das miteinander kommunizierende Hohlräume aufweist,
dadurch gekennzeichnet, daß das Rotorblatt innenseitig eine in etwa zur RotorblattLängsachse verlaufende Trennwand (8, 8a, 8b) aufweist, durch welche eine blattnasenseitige Kammer (9) und blatthinterkantenseitige Kammer (10) gebildet ist und daß zwischen beiden Kammern eine Verbindung besteht, durch welche ein Wärmeträgermedium zwischen der blattnasenseitigen Kammer und der blatthinterkantenseitigen Kammer strömen kann.

9. Rotorblatt nach Anspruch 8,
dadurch gekennzeichnet, daß im mit einer Rotornabe verbindbaren Fußbereich des Rotorblattes Mittel zur Einleitung eines Wärmeträgermediums in zumindest dem blattnasenseitigen Hohlraum (9) vorgesehen sind.

10. Rotorblatt nach einem der Ansprüche 8 und 9,
dadurch gekennzeichnet, daß die Mittel zur Einleitung eines Wärmeträgermediums wenigstens ein elektrisches Gebläse (16, 16' bzw. 25, 26, 27) mit integrierten Heizelementen (28, 29, 30) umfassen, und daß die Saugseite jedes Gebläses (16, 16' bzw. 25, 26, 27) an den blatthinterkantenseitigen Hohlraum (Kammer 10) und die Druckseite jedes Gebläses (16, 16' bzw. 25, 26, 27) an den blattnasenseitigen Hohlraum (Kammer 9) angeschlossen ist.

11. Rotorblatt nach einem der Ansprüche 8, 9 und 10,
dadurch gekennzeichnet, daß die dem Fußbereich des Rotorblattes zugekehrte Endseite des blattnasenseitigen Hohlraumes (Kammer 9) mit einem Verschlußdekkel (13) gegenüber dem zum blatthinterkantenseitigen Hohlraum (Kammer 10) hin offenen Innenraum (7) dichtgesetzt ist.

12. Rotorblatt nach Anspruch 11,
dadurch gekennzeichnet, daß der Verschlußdeckel (13) wenigstens einen Durchbruch aufweist, in den ein Schachtteil (14, 15; 14', 15') mit darin aufgenommenem Gebläse (16, 16' bzw. 25, 26, 27) mit Heizelementen (28, 29, 30) angeordnet ist.

13. Rotorblatt nach Anspruch 12,
dadurch gekennzeichnet, daß jedes Schachtteil (14, 15; 14', 15') zur Blattnasen-kante (2) hin geneigt und in den blattnasenseitigen Hohlraum (Kammer 9) vorsteht.

14. Rotorblatt nach einem der vorhergehenden Ansprüche,
dadurch gekennzeichnet, daß im Übergangsbereich zwischen dem fußbereichsseitigen Ende des Rotorblattes und einem dem Anschluß an eine Rotornabe dienenden Blattadapter (4) eine Innenraumauskleidung aus isolierenden Werkstoffen vorgesehen ist.

15. Rotorblatt nach Anspruch 14,
dadurch gekennzeichnet, daß die Innenraumauskleidung eine in das fußbereichsseitige Ende des Rotorblattes formschlüssig eingesetzte Schaumstoffplatte (5) ist, die etwa parallel zum Verschlußdeckel (13) steht.

## Claims

1. A process for de-icing a rotor blade of a wind-driven power station, which has mutually communicating cavities through which an optionally pre-heated heat-transfer medium is conveyed, characterised in that, after it has flowed through a cavity (9) located along the leading edge of the blade, giving off heat accordingly to regions of the blade wall, the heated heat-transfer medium is directed into a cavity (10) located along the trailing edge of the blade and is conveyed out of said latter cavity.

2. A process according to Claim 1, characterised in that, in a root region of the rotor blade which may be connected to a rotor hub, the heat-transfer medium is introduced into the cavity (9) located along the leading edge of the blade and, in the region of the tip (11) of the rotor blade, is diverted into the cavity (10) located along the trailing edge of the blade and is conveyed away again to the root region.

3. A process according to one of Claims 1 and 2, characterised in that the air located in the rotor blade is used as the heat-transfer medium.

4. A process according to one of Claims 1 to 3, characterised in that, after it has flowed out of the last cavity (10) to be flowed through, the heat-transfer medium which is conveyed away may be heated up and then re-introduced into the cavity (9) located along the leading edge of the blade.

5. A process according to one of the preceding claims, characterised in that electric fans (16, 16' and 25, 26, 27) and heating elements (28, 29, 30) arranged in the air flow generated are used to generate the circulation of the heat-transfer medium.

6. A process according to one of the preceding claims, characterised in that, when the wind-driven power station is running, vibrations resulting from unbalances caused by ice forming on the rotor blades are detected metrologically and converted into a switch signal for stopping the rotor of the wind-driven power station and for activating the circulation of the heat-transfer medium in the rotor blades and, optionally, the associated heating elements (28, 29, 30), in that, after a predetermined operative time of the circulation and the heating elements (28, 29, 30), the wind-driven power station is switched on again, and in that the procedures may be repeated until the wind-driven power station runs in non-vibrating manner as a result of de-icing having been effected.

7. A process according to Claim 6, characterised in that the external temperature, the temperature of the heat-transfer medium, the rotor speed, the wind speed and the vibrations are detected using appropriate sensors (32; 22; 23; 24; 34; 33; 35) and are processed in an automatic program-controlled system (31) to produce corresponding switch signals triggering and controlling de-icing.

8. A wind-driven power station rotor blade having mutually communicating cavities, characterised in that the rotor blade has inside a partition (8, 8a, 8b) which extends approximately [...]¹ to the longitudinal axis of the rotor blade and results in a chamber (9) and a chamber (10) being formed along the leading and trailing edges of the blade respectively, and in that, between both chambers, there is a connection through which a heat-transfer medium can flow between the chamber located along the leading edge of the blade and the chamber located along the trailing edge of the blade.

9. A rotor blade according to Claim 8, characterised in that, in the root region of the rotor blade which may be connected to a rotor hub, means for introducing a heat-transfer medium are provided in at least the cavity (9) located along the leading edge of the blade.

10. A rotor blade according to one of Claims 8 and 9, characterised in that the means for introducing a heat-transfer medium comprise at least one electric fan (16, 16' and 25, 26, 27) having integrated heating elements (28, 29, 30), and in that the inlet side of each fan (16, 16' and 25, 26, 27) is connected to the cavity (chamber 10) located along the trailing edge of the blade, and the outlet side of each fan (16, 16' and 25, 26, 27) is connected to the cavity (chamber 9) located along the leading edge of the blade.

11. A rotor blade according to one of Claims 8, 9 and 10, characterised in that, by means of a sealing cover (13), that end, facing the root region of the rotor blade, of the cavity (chamber 9) located along the leading edge of the blade is sealed with respect to the interior space (7) opening into the cavity (chamber 10) located along the trailing edge of the blade.

12. A rotor blade according to Claim 11, characterised in that the sealing cover (13) has at least one opening in which there is arranged a shaft part (14, 15; 14', 15') having, received therein, fans (16, 16' and 25, 26, 27) with heating elements (28, 29, 30).

13. A rotor blade according to Claim 12, characterised in that each shaft part (14, 15; 14', 15') is inclined towards the leading edge (2) of the blade and projects into the cavity (chamber 9) located along the leading edge of the blade.

14. A rotor blade according to one of the preceding claims, characterised in that an interior lining made of insulating materials is provided in the transition region between the root-region end of the rotor blade and a blade adaptor (4) serving for the connection to a rotor hub.

15. A rotor blade according to Claim 14, characterised in that the interior lining is a foam plate (5) which is inserted in form-fitting manner in the root-region end of the rotor blade and is approximately parallel to the sealing cover (13).

## Revendications

1. Procédé destiné à dégivrer une pale d'éolienne, qui présente des cavités qui communiquent les unes avec les autres, à travers lesquelles est véhiculé un milieu formant fluide caloporteur préalablement chauffé le cas échéant,
caractérisé en ce que le milieu formant fluide caloporteur chauffé, après avoir traversé une cavité située sur le côté de l'extrémité avant de la pale (9), en provoquant un dégagement de chaleur correspondant au niveau de la paroi de la pale, est dirigé vers puis évacué d'une cavité située sur le côté du bord arrière de la pale (10).

2. Procédé selon la revendication 1,
caractérisé en ce que le milieu formant fluide caloporteur est introduit, dans une zone inférieure de la pale pouvant être reliée à un moyeu de rotor, dans la cavité située à l'extrémité de la pale (9), et est dévié, au niveau de l'extrémité de la pale, dans la cavité située sur le côté du bord arrière de la pale pour être ensuite à nouveau évacué vers la zone inférieure.

3. Procédé selon l'une des revendications 1 et 2,
caractérisé en ce que l'air se trouvant dans la pale est utilisé en tant que milieu formant fluide caloporteur.

4. Procédé selon l'une des revendications 1 à 3,
caractérisé en ce que le milieu formant fluide caloporteur évacué est soumis, le cas échéant, suite à son écoulement à partir de la cavité (10) traversée la dernière, à un réchauffement puis de nouveau dans la cavité située sur le côté de l'extrémité de la pale (9).

5. Procédé selon l'une des revendications précédentes,
caractérisé en ce que des ventilateurs électriques (16, 16' ou 25, 26, 27) ainsi que des éléments chauffants (28, 29, 30) positionnés dans le courant d'air produit sont utilisés pour obtenir la circulation du fluide caloporteur dans la pale.

6. Procédé selon l'une des revendications précédentes,
caractérisé en ce que, lorsque l'éolienne est en service, des vibrations sont enregistrées grâce à une technique de mesure en raison de déséquilibres qui se produisent suite à la formation de glace sur les pales et sont transformées en un signal de commutation afin d'arrêter le rotor de l'éolienne et de mettre en route la circulation du milieu formant fluide caloporteur dans les pales et, le cas échéant, les éléments chauffants (28, 29, 30) qui lui sont associés, en ce qu'après un délai d'action prédéterminé de la circulation et des éléments chauffants (28, 29, 30), l'éolienne est remise en marche, et en ce que ces processus sont répétés le cas échéant, aussi souvent que nécessaire, jusqu'à ce que l'éolienne fonctionne sans provoquer de vibrations en raison du dégivrage produit.

7. Procédé selon la revendication 6,
caractérisé en ce que la température extérieure, la température du milieu formant fluide caloporteur, le nombre de tours du rotor, la vitesse du vent et les vibrations sont enregistrés à l'aide de capteurs correspondants (32, 22, 23, 24, 34, 33, 35) et transformés dans un système automatique selon un programme en signaux de commutation correspondants qui démarrent et commandent un dégivrage.

8. Pale d'éolienne, qui présente des cavités qui communiquent les unes avec les autres,
caractérisée en ce que la pale présente, sur le côté intérieur, une paroi de séparation (8, 8a, 8b) s'étendant essentiellement le long de l'axe longitudinal de la pale, à travers laquelle sont agencées une chambre située sur le côté de l'extrémité de la pale (9) et une chambre située sur le côté du bord arrière de la pale (10), et en ce qu'une liaison se forme entre les deux chambres, par laquelle un milieu formant fluide caloporteur peut circuler entre la chambre située sur le côté de l'extrémité de la pale et la chambre située sur le côté du bord arrière de la pale.

9. Pale selon la revendication 8,
caractérisée en ce que des moyens sont prévus dans la zone inférieure de la pale pouvant être reliée à un moyeu de rotor, afin d'introduire un milieu formant fluide caloporteur dans, au moins, la cavité située sur le côté de l'extrémité de la pale (9).

10. Pale selon l'une des revendications 8 et 9,
caractérisée en ce que les moyens permettant d'introduire un milieu formant fluide caloporteur comprennent au moins un ventilateur électrique (16, 16' ou 25, 26, 27) comportant des éléments chauffants (28, 29, 30) intégrés, et en ce que le côté d'aspiration de chaque ventilateur (16, 16' ou 25, 26, 27) est raccordé à la cavité située sur le côté du bord arrière de la pale (chambre 10) et en ce que le côté de refoulement de chaque ventilateur (16, 16' ou 25, 26, 27) est raccordé à la cavité située sur le côté de l'extrémité de la pale (chambre 9).

11. Pale selon l'une des revendications 8, 9 et 10,
caractérisée en ce que le côté d'extrémité de la cavité située sur le côté de l'extrémité de la pale (chambre 9) qui est tourné vers la zone inférieure de l'éolienne est rendue étanche par rapport à l'habitacle ouvert (7) vers la cavité située sur le côté du bord arrière de la pale (chambre 10).

12. Pale selon la revendication 11,
caractérisée en ce que le couvercle de fermeture (13) présente au moins une ouverture, dans laquelle est agencée une partie formant puits (14, 15 ; 14', 15') dans laquelle sont logés des ventilateurs (16, 16' ou 25, 26, 27) et qui comprend des éléments chauffants (28, 29, 30).

13. Pale selon la revendication 12,
caractérisée en ce que chaque partie formant puits (14, 15 ; 14', 15') est inclinée en direction de l'arête de l'extrémité de la pale (2) et dépasse de la cavité située sur le côté de l'extrémité de la pale (chambre 9).

14. Pale selon la revendication 12,
caractérisée en ce que, au niveau de la jonction entre l'extrémité de la pale située sur le côté de la zone inférieure et un adaptateur de pale (4) servant à la connexion avec un moyeu de rotor, il est prévu un revêtement pour l'habitacle composé de matières isolantes.

15. Pale selon la revendication 14,
caractérisée en ce que le revêtement destiné à l'habitacle est une plaque en mousse à engagement positif dans l'extrémité de la pale située sur le côté de la zone inférieure, qui est presque parallèle au couvercle de fermeture (13).
